# EUROPEAN PATENT SPECIFICATION

(11) **EP 2 511 849 B1**
(45) Date of publication and mention of the grant of the patent: **24.02.2016**
(21) Application number: 09851991.1
(22) Date of filing: 31.12.2009
(51) Int. Cl.: G06K 7/00, G06K 7/10, G06K 19/073, G06K 19/077

(54) **RADIO FREQUENCY (RF) APPARATUS, RF CARD READER, RELATIVE COMMUNICATION SYSTEM AND COMMUNICATION METHOD**
HOCHFREQUENZ-(HF-) VORRICHTUNG, HF-KARTENLESER, RELATIVES KOMMUNIKATIONSSYSTEM UND KOMMUNIKATIONSVERFAHREN
APPAREIL À RADIOFRÉQUENCES (RF), LECTEUR DE CARTES RF, SYSTÈME DE COMMUNICATION ET PROCÉDÉ DE COMMUNICATION CORRESPONDANTS

(30) Priority: 09.12.2009 CN 200910250430
(43) Date of publication of application: 17.10.2012
(73) Proprietor: Nationz Technologies Inc., Shenzhen, Guangdong 518057 (CN)
(72) Inventor: YU, Yunbo, Shenzhen Guangdong 518057 (CN); ZHU, Shan, Shenzhen Guangdong 518057 (CN); OUYANG, Li, Shenzhen Guangdong 518057 (CN)
(74) Representative: Hanna, Peter William Derek
(86) International application number: PCT/CN2009/076349
(87) International publication number: WO 2011/069312

(56) References cited:
- WO-A1-99/52061
- WO-A1-2008/128965
- CN-A- 101 388 124
- GB-A- 2 310 067
- JP-A- 2009 135 610

## Description

### Technical Field

The present invention is related to an apparatus, a method and a system for performing range-controllable short-range secure data communications between a radio frequency (RF) terminal and an RF communication apparatus, and more specifically, to a range control communication apparatus, system and secure communication method comprising RF apparatuses (for example, RF cards) or RF communication terminals (for example, cellular phones, PDAs) having short-range RF communication functionalities with short-range RF communication apparatus (for example, Point of sales (POS) machines or card readers).

### Background Art

Nowadays, RF communication terminals, particularly RF cards have been popular. The demand becomes stronger and stronger for enabling mobile or fixed communication terminals to have short-range communication functionalities through adaptation, particularly the functionalities such as realizing electronic payment by using mobile RF communication terminals like cellular phones. At the present day, method appears for realizing short-range communication of cellular phone by adding RF functionalities on Subscriber Identify Module (SIM) card of a cellular phone (known as SIM card) or adding short-range communication modules on the mother board of a cellular phone. The appearance of such method makes cellular phones become super smart terminals which can facilitate charge, consumption, transaction and identity authentication, greatly meeting the active demand of the market.

Wherein, the RF SIM-based short-range solution of a cellular phone arises wide concern due to its advantages of simpleness and no need to change the cellular phone. In the solution, RF SIM enables the RF signals to be transmitted from a cellular phone when the RF SIM card is embedded inside the cellular phone by using technologies such as Ultra High Frequency (UHF), thus making the cellular phone have short-range communication functionalities without making any structural change to the existing cellular phone. However, different cellular phones, due to differences in their internal structures, have a very large variance in their effectiveness of transmitting RF signals. The RF SIM card of those cellular phones that are strong in transmission has a RF communication range of several meters. The RF SIM card of those cellular phones that are weak in transmission may also have a RF communication range of tens of centimeters. In mobile payment applications, such as swiping card on buses or subways, generally there is a stringent requirement for the transaction range to ensure the safety of transaction, for example, the transaction range is required to be limited within 10 cm, to avoid mis-swiping of card without users' knowledge, causing losses; on the other hand, it is also required to ensure the reliability of the communication within the transaction range, so as to improve the transaction efficiency. Therefore, RF SIM-based cellular phone should also be capable of effectively controlling its transaction range while being added with the short-range communication functionalities.

In the existing RF communication technologies, range-controllable transactions can be realized by a contactless card technology based on ISO 14443 standards. In said technology, a card reader continuously transmits alternating magnetic field transmission signals and energy. When the card approaches the card reader, the inside coil may sense energy for the interior circuit of the contactless card to operate, meanwhile it may also demodulate the signals therein to realize communications between the card and the card reader. Due to severe attenuation of magnetic field energy with the range, they are difficult to be transmitted to a greater distance, thus range-controllable communications may be realized by using said technology. But in fact, such a technology is hard to be applied to the RF card, such as a SIM card, of a built-in device. The reason is that, products like SIM card have rather small area and are embedded inside the cellular phone, because battery and other components containing metal exist in the cellular phone, the alternating magnetic field will generate eddy currents and attenuate rapidly, resulting in that the magnetic energy and signals radiated by the card reader can not penetrate the cellular phone to perform communication with the RF SIM card. This problem can not be solved in the art for many years. In Japan, for example, electronic payments using cellular phones have been popular. However, only specifically-designed cellular phones can be used to perform short-range communication required by the payment. The business costs for performing mobile payment in such a mode is much more higher than that of performing mobile payment by merely changing the SIM card. The ISO 14443 technology can not be carried out on a SIM card, this is just the reason why Japan does not use the mode of merely changing the SIM card.

The invention patent CN 200810142624.1 proposed a system and method for controlling an RF communication range for a mobile terminal. The method firstly establishes a corresponding near-field spectrum for each type of radio frequency mobile terminal on a radio frequency control terminal through the test method; a detector array is utilized to compare the field intensity of the current radio frequency mobile terminal obtained by detection with the near-filed spectrum through the matching algorithm to obtain the matching degree for comparison; the obtained matching degree is compared with a threshold which is preset in the radio frequency control terminal and corresponds to the type of the radio frequency mobile terminal, thereby judging whether the distance between the current radio frequency mobile terminal and the radio frequency control terminal is in the stipulated range. Said method requires to first acquire a near-field spectrum for each radio frequency control terminal by methods such as experiment, which is called calibration, the process has stringent requirement and is rather complicated; besides, said method is based on the field intensity of RF signals, and is susceptible to the interference of RF signals, so a complicated method is needed if the system wants to shield off and eliminate the interference.

WO99/52061A1 proposed a data transaction system for process monitoring, which uses smart cards (1) featuring contact and bi-directional inductive coupling communication, for collecting and storing data. The system comprises fixed triggering stations (2, 2') for short range data transfer with the smart cards in response to emissions from sensors (43). The sensors report data related to variables such as location, device status, operation sequencing and time. A sending-and-receiving station (3) allows for downloading the stored data and for loading instruction sets in contact mode or contactless mode. The smart cards comprise signal amplification means (15, 44), transceivers (5', 40), a processor (8), memory (9), timing means (7), an on-board battery (4), non-compliance warning (42), as well as optional feedback and energy saving procedures.

GB2310067A proposed a battery built-in wireless ID card unit and ID verification unit, wherein a wireless ID unit 30, such as a card, includes a magnetic field detection section 3 which generates an electromotive force from a received magnetic field (generated by an ID verification unit 20 at, for example, a gate or door) to turn on a power switch 2 of a built-in battery 1. The battery then powers a control section 5 which transmits an ID code by radio 7, 8. The control section 5 then turns off the power switch 2.

JP2009135610A proposed a communication system and communication apparatus to execute high-speed proximal wireless communication by using a high-frequency/wide-band signal between communication instruments located at a near distance to each other. This communication system includes a transponder and a reader/writer carrying out proximal wireless communication by an inductive coupling method, wherein determination of whether the transponder is brought close to the reader/writer becomes accurate because electric field intensity is drastically changed with respect to distance, and can start communication according to the intention of a user carrying out an operation bringing the transponder close to the reader/writer. The communication system is equipped with a high-speed high-capacity wireless communication means, and achieves high-speed communication and reduction of power consumption by controlling its power-on/off in response to the result of determination of whether the transponder is brought close to the reader/writer.

### Summary of the Invention

The present invention provides a an RF apparatus, an RF card reader in accordance with claims which follow.

To eliminate the deficiencies of technologies of ISO 14443 and patent CN 200810142624. 1, the present invention relates to an RF apparatus, an RF card reader corresponding thereof, and a communication system and an RF secure communication method utilizing the above RF apparatus and RF card reader, for the problem of range control of short-range transaction between the RF apparatus (particularly RF cards built in a device, such as RF SIM card) and the RF card reader. Said communication system performs communication authentication by using a magnetic field so as to confirm the transaction range and the identity of the person who submits the transaction, then performs identity authentication and normal transaction by using the characteristic that high frequency RF signals can penetrate the internal structure of a cellular phone and can realize high-speed data exchange, thus realizing range-controllable short-range secure communications. Such a system can reliably control the data communication range (that is, the transaction range) between the RF communication terminal containing an RF apparatus (such as a cellular phone having an RF SIM card) and an RF communication device (such as a card reader) within a prescribed range.

The present invention provides an RF apparatus, comprising at least one RF transceiver module, at least one RF antenna, at least one magnetic induction and receiver module which is capable of sensing a magnetic field and detecting change information of the magnetic field, and at least one microcontroller; said RF transceiver modules are electrically connected to at least one RF antenna and at least one microcontroller, respectively, said microcontroller is for processing the transceived RF information; said magnetic induction and receiver module is electrically connected to at least one microcontroller, and said microcontroller is for processing change information of the magnetic field.

Further, said magnetic induction and receiver module may be a solenoid coil, a Hall device, or a magnetic induction switch.

Further, said RF transceiver module, RF antenna, microcontroller, and magnetic induction and receiver module are integrated within one card body.

Further, the induction range of said magnetic induction and receiver module is set within a preset range.

Further, when said magnetic induction and receiver module does not sense the magnetic field, said RF transceiver module and microcontroller (which may also include other modules on the RF apparatus) are in a dormant state; when said magnetic induction and receiver module senses the magnetic field, the sensed magnetic field signal is converted to an electrical signal, and said RF transceiver module and microcontroller are activated (other modules on the RF apparatus may be activated simultaneously).

Further, a threshold value or threshold value range is preset in said magnetic induction and receiver module, when the converted electrical signal meets the threshold value or the threshold value range, said RF transceiver module and microcontroller are activated (other modules on the RF apparatus may be activated simultaneously), otherwise not activated.

Further, the threshold value or threshold value range preset in said magnetic induction and receiver module is adjustable.

Further, said RF apparatus is directly integrated onto an integrated circuit (IC) card, an SDIO card, an SD card, an MMC card, a mother board of an apparatus, or an apparatus shell. That is, said RF apparatus may be integrated as a whole with other cards (such as SIM cards), mother boards or apparatuses.

Further, said RF apparatus may directly use the IC card, SDIO card, SD card, MMC card, or CPU on the mother board as its microcontroller.

Further, said RF apparatus is disposed in a mobile apparatus or a fixed apparatus. Said mobile apparatus may be: a cellular phone, a personal digital assistant (PDA), or a laptop computer; and said fixed terminal may be a personal computer, an industrial control computer, an automatic teller machine (ATM), or an access control terminal.

The foregoing technical solutions may also be combined with each other to form an RF apparatus having more preferred technical solutions.

The present invention further provides an RF card reader, comprising: at least one RF transceiver module, at least one RF antenna, and at least one microcontroller; said RF transceiver modules are electrically connected to at least one RF antenna and at least one microcontroller, respectively, and said microcontroller is for processing the transceived RF information; further comprising at least one magnetic transmission module for generating and transmitting an induction magnetic field, said magnetic transmission module is electrically connected to at least one microcontroller, and said magnetic transmission module is capable of transmitting a magnetic field based on the instruction information from the microcontroller.

Further, the magnetic field transmitted by said magnetic transmission module is a non-alternating magnetic field.

Further, the magnetic field transmitted by said magnetic transmission module is an alternating magnetic field of very low frequency.

Further, said alternating magnetic field has a frequency of 100 KHz to 0.1 KHz.

Further, said alternating magnetic field has a frequency of 30 KHz to 1 KHz.

Further, said alternating magnetic field has a frequency of 50 KHz, 30 KHz, 20 KHz, 10 KHz, 5 KHz, 2 KHz, or 1 KHz.

Further, said magnetic transmission module transmits an amplitude-variable magnetic field based on the instruction information from the microcontroller.

Further, the magnetic field transmitted by said magnetic transmission module is a magnetic field having no or little variation of magnetic distribution.

Further, the transmission range of said magnetic transmission module is set within a preset range.

Further, said magnetic transmission module modulates the instruction information to the transmitted magnetic field.

Further, said modulation mode is an on-off keying scheme or a time-modulation scheme.

The foregoing technical solutions may also be combined with each other to form an RF card reader having more preferred technical solutions.

The present invention further provides an RF secure communication system, wherein said RF secure communication system comprises: a radio frequency apparatus, comprising at least one RF transceiver module, at least one RF antenna, at least one magnetic induction and receiver module which is capable of sensing a magnetic field and detecting change information of the magnetic field, and at least one microcontroller; wherein said at least one RF transceiver module is electrically connected to the at least one RF antenna and the at least one microcontroller, respectively, wherein said microcontroller is adapted for processing transceived RF information; wherein said magnetic induction and receiver module is electrically connected to the at least one microcontroller, and wherein said microcontroller is adapted for processing change information of the magnetic field; an RF card reader, comprising at least one RF transceiver module, at least one RF antenna, and at least one microcontroller; wherein said at least one RF transceiver module is electrically connected to the at least one RF antenna and the at least one microcontroller, respectively, and said microcontroller is adapted for processing the transceived RF information; wherein the RF card reader further comprises at least one magnetic transmission module for generating and transmitting an induction magnetic field, wherein said magnetic transmission module is electrically connected to the at least one microcontroller, and wherein said magnetic transmission module is capable of transmitting a magnetic field based on an instruction information from the microcontroller; characterized in that range control is performed through a magnetic field, wherein identity authentication is performed through a magnetic field and radio frequency, and wherein information communication is performed through radio frequency between the RF apparatus and the RF card reader ; and the RF apparatus configured for sending corresponding RF information to the RF card reader through an RF channel based on an instruction information obtained by demodulation of said detected change information; and configured for performing information communication through radio frequency with the RF card reader, if identity authentication is verified by the RF card reader based on the RF information; said system further configured such that otherwise, no operation is performed.

The present invention further provides an RF secure communication method, in the method, at least one magnetic induction and receiver module which is capable of sensing a magnetic field and detecting change information of the magnetic field is provided on the RF apparatus; at least one magnetic transmission module for generating and transmitting an induction magnetic field is provided on the RF card reader, specifically comprising the following steps:
step a: the magnetic transmission module on the RF card reader modulates the preset instruction information into the magnetic field signal, and sends out said magnetic field signal;
step b: when the magnetic induction and receiver module on the RF apparatus received the magnetic field signal transmitted by the magnetic transmission module, the instruction information therein is demodulated;
step c: the RF apparatus sends corresponding RF information to the RF card reader through an RF channel based on the instruction information obtained by demodulation;
step d: the RF card reader performs identity authentication based on the RF information received by the RF channel;
step e: if the identity authentication is verified, information communication is performed through radio frequency between the RF card reader and the RF apparatus; otherwise, no operation is performed.

Further, the magnetic field transmitted by said magnetic transmission module comprises an electromagnet and the magnetic field transmitted by said magnetic transmission module is a static magnetic field generated using said electromagnet, wherein the instruction information is modulated on the static magnetic field by one of OOK, time modulation, Manchester encoding, Pulse Width Modulation (PWM) or Pulse Period Modulation (PPM).

Further, the magnetic field transmitted by said magnetic transmission module comprises a low-frequency signal generator comprising a coil antenna and a switch, the magnetic field transmitted by said magnetic transmission module is an alternating magnetic field generated by means of said low-frequency signal generator.

Further, said alternating magnetic field has a frequency of 100 KHz to 0.1 KHz.

Further, said alternating magnetic field has a frequency of 30 KHz to 1 KHz.

Further, said alternating magnetic field has a frequency of 50 KHz, 30 KHz, 20 KHz, 10 KHz, 5 KHz, 2 KHz, or 1 KHz.

Further, said magnetic transmission module transmits an amplitude-variable magnetic field based on the preset instruction information.

Further, the magnetic field transmitted by said magnetic transmission module is a magnetic field having no or little variation of magnetic distribution.

Further, in said step a, the modulation mode is on-off keying scheme or a time-modulation scheme.

Further, in said step c, the RF apparatus sends the instruction information obtained by demodulation to the RF card reader directly through an RF channel; in said step e, if the instruction information from the RF apparatus received by the RF card reader from the RF channel is the same as the preset instruction information, the identity authentication is verified, otherwise the identity authentication is not verified.

Further, the transmission range of said magnetic transmission module is set within a preset range.

Further, the sensing range of said magnetic induction and receiver module is set within a preset range.

Further, when said magnetic induction and receiver module does not sense the magnetic field, other modules on said RF apparatus are in a dormant state; when said magnetic induction and receiver module senses the magnetic field, the sensed magnetic field signal is converted to an electrical signal, and other modules on the RF apparatus are activated.

Further, a threshold value or threshold value range is preset in said magnetic induction and receiver module, when the converted electrical signal meets the threshold value or the threshold value range, other modules on the RF apparatus are activated, otherwise not activated.

Further, the threshold value or threshold value range preset in said magnetic induction and receiver module is adjustable.

The foregoing technical solutions may also be combined with each other to form an RF secure communication method having more preferred technical solutions.

The problem of range control of short-range transaction between the RF apparatus (particularly RF cards built in a device, such as RF SIM cards) and the RF card reader in the prior art can be well overcome by using the solutions of the present invention. In the present invention, first the communication range is controlled through a magnetic field, furthermore identity authentication may be performed through a magnetic field, and then reliable communication (for example, identity authentications, contactless electronic transactions) may be performed through radio frequency between the RF card and the RF card reader.

As an important preferred technical solution of the present invention, the magnetic field transmitted by the magnetic transmission module of the RF card reader is a non-alternating magnetic field in the present invention.

From the principles of physics, the magnetic field energy decays quickly as the distance increases. Besides, the properties of the magnetic field are relatively insensitive to the ambient environment, and its characteristics are relatively stable and reliable. However, an alternating magnetic field and a non-alternating magnetic field, such as a static magnetic field in the magnetic field, have very different characteristics on penetration capabilities through objects.

Since the magnetic lines of force of an alternating magnetic field are constantly changing, when a metal object approaches the magnetic field, the movement of cutting through the magnetic lines of force will be inevitably generated, so that eddy currents are formed inside the metal object, causing loss in the magnetic field strength, thereby greatly reducing the penetration capability of the field. As described above, the contactless card system utilizing 13.56 MHz of ISO 14443 technology just performs communication by using an alternating magnetic field. However, when the RF IC card is disposed inside a terminal such as a cellular phone, due to the influence of the metal components inside the cellular phone, the shell metal components of the mobile terminal and the like, it is really difficult for the magnetic signals of the card reader to penetrate these metals to establish communication with the IC card, and such condition will be more severe for the cellular phone having a metal shell. This is particularly true when the adopted alternating magnetic fields are medium-frequency or high-frequency alternating magnetic fields, such as the alternating magnetic fields higher than 125 KHz, or the alternating magnetic fields higher than 1 MHz, such as the alternating magnetic field of 13.56 MHz in the ISO 14443 technology. Then, even if some magnetic signals penetrate the shell of the device, there still exists the case where the signals are unstable or too weak for communications.

As for a non-alternating magnetic field such as a static field, the magnetic lines of force have little change in their directions and positions, when a metal object approaches the magnetic field but remains stationary, it will not generate the movement of cutting through the magnetic lines of force, and there is no eddy current formed in the metal object, thus the magnetic field can easily pass through the metal. In a further improved solution of the present invention, the excellent penetration capability of the non-alternating magnetic field is utilized to realize range-controllable short-range secure communications, thus solving the key technical problem of signal penetration and controllable communication range that can not be solved by the traditional electromagnetic field communication as well as alternating magnetic communication. The disadvantage of non-alternating magnetic field is that the modulation rate that it can carry is not high, for example, its communication rate may not reach 1KHz. However, the RF card reader of the present invention merely uses it to transmit very little amount of information codes to the RF card, for interaction with the RF card so as to verify the identity and to avoid malicious attack. Thus, said problem has no effect on the application as stated in the present invention.

Said system is characterized in that there exist two communication channels of different characteristics (take the RF SIM card disposed in the mobile apparatus for an example):
1) using a low-speed, one-way first channel having stable and controllable range and formed by performing communication using non-alternating magnetic field to transmit a small amount of information for performing identity authentication, to avoid malicious interference and attacks. The RF card reader controls a magnetic transmission module, according to the instruction information rule, to vary the strength of the magnetic field, but with little or no variation in field distribution to avoid the Eddy currents, thereby increasing the capability of the penetration of the magnetic field. The magnetic induction and receiver module in said RF SIM card can sense the change in the magnetic field strength, and extract the change information, thus realizing the one-way information transfer between the RF card reader and the RF SIM card. This information is for verifying the identity of the main transactions such as the RF card reader together with the RF SIM card.
2) using a high-speed, second communication channel formed by the RF transceiver module to complete identity authentication and to perform the main transactions. RF signal high-speed communication can be realized between the RF card reader and the RF SIM card directly through the RF transceiver module, and the identity authentication between the RF card reader and the RF SIM card is performed through this RF signal communication by using the information transmitted by the magnetic induction, thus normal transaction is performed.

A magnetic field particularly a non-alternating magnetic field has an energy that decays quickly with the increase of distance, and the magnetic field characteristic is less susceptible to ambient environment. No matter whether metal objects, conductive materials, or human bodies exist or not, the magnetic field energy still reliably decays following the inherent rule. Thus, using such a magnetic field to transmit information at a short range can be predictable and highly reliable.

The non-alternating magnetic modulation short-range RF secure communication system just performs range-controllable short-range communication based on this characteristic of the magnetic field. Using the non-alternating magnetic modulation short-range RF secure communication system, the maximum intensity of emission of the magnetic transmission module and the receiving sensitivity of the magnetic induction and receiver module may be preset so that the maximum induction distance can be the set target range. For example, the following method can be used to realize the range-controllable secure communication:
1) presetting the magnetic field emission power of said magnetic transmission module and the receiving sensitivity of said magnetic induction and receiver module so that the maximum induction distance can reach the set target range, for example, 1 cm, 2 cm, 5 cm, 10 cm, 15 cm, or 20 cm, etc;
2) said RF card reader controls a magnetic transmission module, according to the rule, to vary the strength of the magnetic field, but with no significant change to the field distribution, modulates information A1 containing its identity information onto the amplitude of the strength of the magnetic field. Said RF SIM card senses the magnetic field amplitude variation and obtains extract formation A2 through the induction and receiver module thereon;
3) said RF SIM card sends information A2 to said RF card reader through the RF channel constituted by the first RF transceiver module and the second RF transceiver module. Said card reader receives and obtains information A3 through the RF channel;
4) said RF card reader compares the received information A3 with the original information A1 transmitted by the magnetic modulation. If they match, then it is determined that this communication is initiated by the card reader itself, and is legitimate. In addition, due to the characteristic that its range can not be radiated to a long distance based on the magnetic field ability, it can be determined that the current communication distance is within the preset range. Thus, normal transaction processes can be performed.

In the aforesaid method, said information of A1, A2, A3 etc. may either be identical information, or specifically processed information, such as information encrypted with predetermined keys or information processed by a prescribed processing mode. This can better protect the security of the transactions.

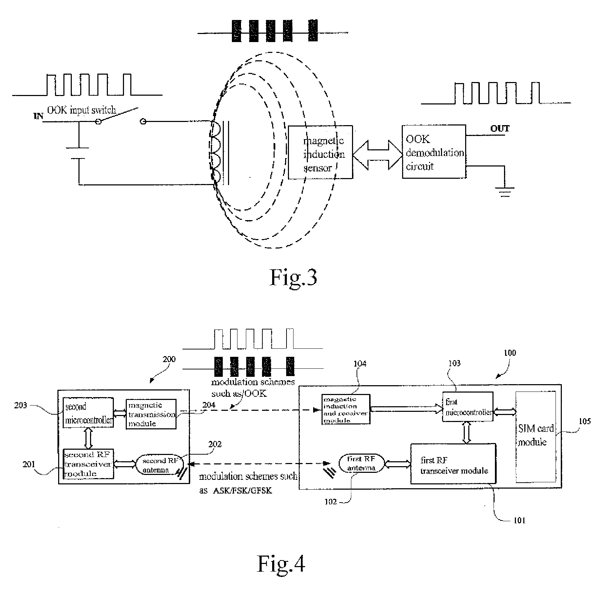

In step 2) in the aforesaid range control method, there exist many methods for modulating, by the RF card reader, information onto the magnetic field without significantly changing the field distribution. The methods that can be used include:
1) On-Off Keying (OOK) scheme. This is a simple modulation format, where modulation is performed by turning on or off the magnetic field signal source based on signal bits. FIG 3 is a schematic diagram illustrating a simple magnetic communication OOK modulation scheme. As shown in FIG. 3, the RF card reader is provided with an electromagnetic device and a switch. When the switch is turned off, the electromagnetic device is activated, and a static magnetic field is generated. When the switch is turned on, the magnetic field is eliminated. The RF SIM card is provided with a magnetic induction sensor, such as a Hall device. When the magnetic field exists, the magnetic sensor outputs a high level; when the magnetic field does not exist, the magnetic sensor outputs a low level. Following a sequence of information bit of "1" or "0" to turn on or off the switch, correspondingly the magnetic field is generated or is turned off, and the magnetic induction sensor can sequentially output high level and low level, respectively, corresponding to information bits of "1" and "0," realizing information modulation and transmission;
2) Time modulation scheme. By controlling the transmission time of the magnetic transmitter, the magnetic induction and receiver module times the received magnetic field signals, different durations correspond to different binary values in the magnetic field, for example, 10 ms correspond to "1," and 20 ms correspond to "0."
3) Other modulation schemes include Manchester encoding, Pulse Width Modulation (PWM), Pulse Period Modulation (PPM), which are commonly used in communication systems, and it unnecessary to give more details.

To enhance security of range control, in step 3 and step 4 in the aforesaid range control method, an encryption mode may be used in the transmission and reception of information A2 to avoid illegal and malicious attack; in addition, in step 3 of the range control method, the identity information of the RF SIM card itself may also be added to information A2 to be transmitted to said RF card reader so as to realize bidirectional identity authentication.

To reduce the power consumption of the magnetic induction and receiver module on said RF SIM card, said non-alternating magnetic modulation short-range RF secure communication system can decrease the power consumption of the RF SIM card by a method of dormant and periodically wake-up, which has been stated in the foregoing paragraphs, thus it is unnecessary to give more details.

The magnetic induction and receiver module in said RF SIM card may also be connected with the first RF transceiver module therein, which has a signal processing function. Said transceiver module can detect and extract the signal output from the magnetic induction and transceiver module and transmit the signal to the first microcontroller.

The mobile communication terminal having the RF SIM card in said system may also be a mobile communication terminal which has a short-range RF communication functionality, that is, said first RF transceiver module can be built in the mobile communication terminal to realize the short-range communication with said RF card reader.

The magnetic induction and receiver module in said RF SIM card may be a solenoid coil, a Hall device, or a magnetic induction switch.

The first RF transceiver module in said RF SIM card and the second RF transceiver module in said RF card reader can work in the super high frequency (SHF) band, very high frequency (VHF) band, or ultra high frequency (UHF) band.

No matter non-alternating magnetic modulation technology or alternating magnetic modulation technology is used, since two communication channels (that is, magnetic field and radio frequency) are used to perform range control and identity authentication, the problems of range control in the short-range transactions between the RF apparatus (particularly RF cards built in a device, such as RF SIM card) and the RF card reader and identity authentication are betterly solved, as compared with the prior art.

A further improved solution of the present invention uses a non-alternating magnetic modulation technology. As compared with the technology of using alternating magnetic modulation, the technical effects of said non-alternating magnetic modulation technology are: realizing reliable range control by using the characteristic that the non-alternating magnetic field decays quickly with the distance and the magnetic field is less susceptible to interferences, performing identity verification by means of a non-alternating magnetic modulation information communication technology to avoid malicious attack, enhancing the robustness of system communication, realizing key applications such as mobile payments having more commercial values in combination with the characteristic that the non-alternating magnetic modulation communication is of short range and is reliable as well as the RF signals have a wide bandwidth and are capable of presenting the terminal of a cellular phone; since the energy transmission and induction of the non-alternating magnetic field has small correlation with the outline structure of the mobile communication terminal, the consistency of the intensity of the induction signals of the RF apparatus in different mobile communication terminals is guaranteed, thus facilitating effective promotion and application of the RF apparatus, particularly the RF SIM card.

The alternating magnetic field used in the prior art is at least higher than 125 KHz, and the penetrating effect will be very bad if the alternating magnetic field higher than such a frequency is applied to the present invention. But actually, certain magnetic penetration effect can be achieved by the alternating magnetic field of very low frequency (lower than 100KHz), so the alternating magnetic field of very low frequency may also be used to substitute the non-alternating magnetic field for communications. To achieve better communication effect, the lower the frequency is, the better the effect is, but the frequency could not be too low, and the communication speed will be affected if the frequency is too low, for example, the frequency is better not lower than 0.1 KHz. As a preferred frequency of the alternating magnetic field, it may select the frequencies such as 80KHz, 60KHz, 50KHz, 30KHz, 20KHz, 10KHz, 5KHz, 2KHz, 1KHz, 0.5KHz, 0.3KHz etc. Wherein good communication effect can be achieved if the frequencies of 30KHz to 1KHz, 20KHz to 1KHz, or 10KHz to 1KHz are selected.

Certainly, the technical solution of using a non-alternating magnetic field has better effect in communication as compared with the technical solution of using alternating magnetic field or the alternating magnetic field of low change frequencies. The technical solution of using a non-alternating magnetic field can be easily implemented and has stronger magnetic field penetration power and better communication effect.

The present invention is further illustrated through some specific embodiments in combination with the drawings provided below.

### Brief Description of Accompanying Drawings

- FIG. 1: is a logic schematic block diagram of an RF SIM card according to the present invention;
- FIG. 2: is a logic schematic block diagram of an RF card reader according to the present invention;
- FIG. 3: is a schematic diagram of a simple magnetic communication OOK modulation scheme;
- FIG. 4: is a diagram of a range control system according to the present invention;
- FIG. 5: is a diagram of a range control flow according to the present invention;
- FIG. 6: is a diagram illustrating a communication performed by using an alternating magnetic field of very low frequency according to the present invention.

### Detailed Description of the Preferred Embodiments

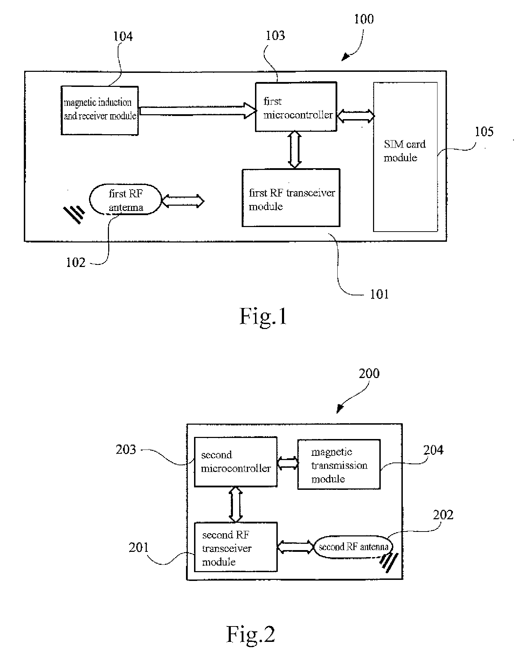

As shown in FIG. 1, an RF SIM card 100 is provided, comprising a SIM card main body 105, a first RF transceiver module 101, a first RF antenna 102, and a first microcontroller 103, said first RF transceiver module 101 being electrically connected to said first RF antenna 102 and said first microcontroller 103, respectively, further comprising a magnetic induction and receiver module 104, said magnetic induction and receiver module 104 being electrically connected to said first microcontroller 103.

Said magnetic induction and receiver module 104 may be realized by using the solenoid coil, Hall device, or magnetic induction switch in the traditional technology, or using a Hall magnetic sensor to cooperate with the analogue-digital (A/D) converter circuit.

As shown in FIG. 2, an RF card reader 200 is provided and can be used with said RF SIM card 100, comprising a second RF transceiver module 201, a second RF antenna 202, and a second microcontroller 203, said second RF transceiver module 201 being electrically connected to said second RF antenna 202 and said second microcontroller 203, respectively, further comprising a magnetic transmission module 204 for generating an induction magnetic field, said magnetic transmission module 204 being electrically connected to said second microcontroller 203.

Said magnetic transmission module 204 can be realized by using a DC electromagnet or equivalent devices. Through a low-frequency OOK modulation scheme, by using the mode where a stronger field represents 1 and a weaker or absent field represents 0, the digital signals are sent to the magnetic induction and receiver module 104, and are converted into digital electrical signals by the magnetic induction and receiver module 104 and provided to the first microcontroller 103 for processing.

When the RF SIM card 100 approaches the RF card reader 200, said magnetic induction and receiver module 104 senses the adapted magnetic field signal generated from said magnetic transmission module 204. The magnetic field signal is converted and processed into an electrical signal and then sent to the first microcontroller 103 of the RF SIM card. The first microcontroller 103 analyzes the rule of magnetic field strength variation, and extracts the modulation information like amplitude, thereby realizing the information transfer between the RF card reader 200 and the RF SIM card 100. Said RF card reader 200 and said RF SIM card 100 further realize RF signal communication through the first RF transceiver module 101 and the second RF transceiver module 201 directly.

The actual method for "first microcontroller 103 analyzing the rule of magnetic field strength variation, and extracting the modulation information like amplitude" may be an OOK modulation scheme, that is, the binary signals of '0' and '1' may be determined and restored by detecting the existence (or intensity) of the magnetic field.

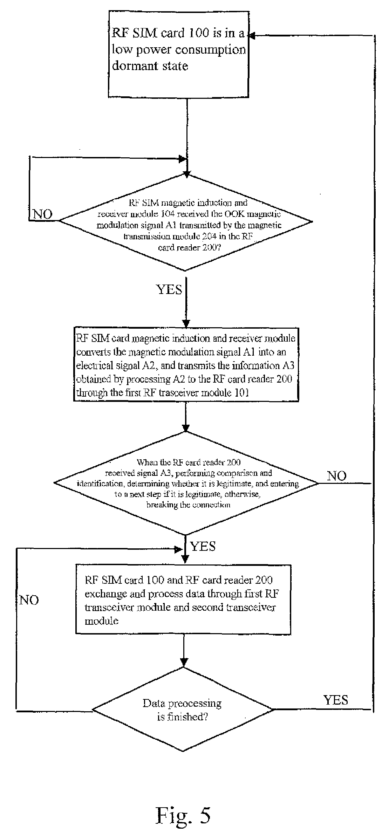

With reference to FIGS. 4 and 5, the RF communication process between said RF SIM card 100, which functions as a smart RF card, and said RF card reader 200 is briefly described, that is, the specific control flow for the non-alternating magnetic induction range control method of the RF communication in the present invention.
Step 1: in a normal state, that is, when the RF SIM card 100 does not approach said RF card reader 200, the first RF transceiver module 101 and the first microcontroller 103 of the RF SIM card are in a dormant state. Then, the RF SIM card 100 is in a state in which data can not be transmitted or received through the first RF transceiver module, and the whole card is in a lowest power consumption state.
Step 2: when said RF SIM card 100 approaches said RF card reader 200, the RF SIM card 100 is in the magnetic field generated by the magnetic transmission module 204 of the RF card reader 100, and the magnetic induction and receiver module 104 of the RF SIM card 100 senses the magnetic field signal A1 from said magnetic transmission module 204. The magnetic field signal can be an OOK modulation signal, or can be a signal modulated by controlling the magnetic field transmission time.
Step 3: the sensed magnetic field signal is converted and processed to a specific electrical signal A2, which activates and initiates said first RF transceiver module 101 (alternatively, whether to perform activation can be determined by presetting an electrical signal threshold value). Said RF SIM card 100 processes information A2 and forms information A3, which is sent to said RF card reader through the RF channel formed by the first RF transceiver module and the second transceiver module.
Step 4: said RF card reader compares and authenticates the received information A3, and if it is determined that this communication is initiated by the RF card reader itself, due to the characteristic that its range can not be radiated to a long distance based on the magnetic field ability, it can be determined that this transaction is a legitimate transaction satisfying the range requirement. If the transaction is not legitimate, this connection is directly broken.
Step 5: when it is determined that this transaction is a legitimate transaction that satisfies the range requirement, the RF transaction data is exchanged and processed between the first RF transceiver module 101 of the RF SIM card 100 and the second transceiver module 201 of the RF card reader 200 (through their respective first and second RF antennae 102, 202).
Step 6: the first and second microcontrollers 103, 203 finish processing of the transaction data.

In this embodiment, the threshold value for said first RF transceiver module 101 being activated by the electrical signal converted through the magnetic induction is adjustable.

The electrical signal activates a threshold value, which may be a voltage value or a current value in an analog circuit, or a binary sequence code in a digital circuit. For example, if the RF SIM card 100 uses a binary code "10011101" in a digital circuit as the activation threshold value, then only when the RF card reader 200 modulates and transmits the binary code "10011101" through the magnetic transmission module, and the RF SIM card 100 detects and demodulates the signal "10011101," the two can start to be connected and enter the subsequent communication process.

The first RF transceiver module 101 in said RF SIM card 100 and the second RF transceiver module 201 in said RF card reader 200 can work in the super high frequency (SHF) band, very high frequency (VHF) band, or ultra high frequency (UHF) band.

The devices, such as the solenoid coil, Hall device, or magnetic induction switch used by said magnetic induction and receiver module 104, and the DC electromagnet used by said magnetic transmission module 204 all belong to common techniques, wherein the Hall device is a magnetic field sensor or controller manufactured based on the Hall effect.

The process for converting the electromagnetic signal may be performed within the magnetic induction and receiver module 104, or may be performed within the first microcontroller 103, and may also be performed through OOK demodulation scheme as the simplest processing mode, that is, the binary signals '0' and '1' may be determined and restored by detecting the existence of the magnetic field. The process may also be performed by a time-modulation scheme, that is, performing decoding by identifying the magnetic field time transmitted by the magnetic transmission module, for example, magnetic field signals that satisfy the requirement and are continuously received for 10ms can represent '1', and magnetic field signals that satisfy the requirement and are continuously received for 20ms can represent '0'. These are traditional techniques, and it is unnecessary to give more details.

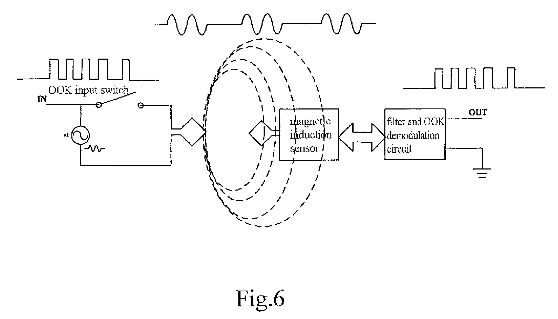

FIG. 6 is a simple example illustrating low-frequency alternating magnetic field communication by using OOK modulation scheme. As shown in FIG. 6, the RF card reader is provided with a low-frequency signal generator, a coil antenna, and a switch. When the switch is turned off, the low-frequency signal generates a low-frequency alternating magnetic field on the coil. When the switch is turned on, the low-frequency alternating field is eliminated. The RF SIM card is provided with a magnetic induction coil and a magnetic induction sensor. When the alternating magnetic field exists, the magnetic induction coil and the magnetic induction sensor output an alternating signal, and when the alternating magnetic field does not exist, they output a low level. Following a sequence of information bit of "1" or "0" to turn on or off the switch, the magnetic field is correspondingly generated or turned off, and the magnetic induction sensor can sequentially output an alternating signal and low level (no signals), thus information bits of "1" and "0" can be demodulated through the filter and OOK demodulation circuit, thereby realizing information modulation and transmission.

## Claims

1. An RF secure communication system, wherein said RF secure communication system comprises:
a radio frequency (RF) apparatus (100), comprising at least one RF transceiver module (101), at least one RF antenna (102), at least one magnetic induction and receiver module (104) which is capable of sensing a magnetic field and detecting change information of the magnetic field, and at least one microcontroller (103); wherein said at least one RF transceiver module (101) is electrically connected to the at least one RF antenna (102) and the at least one microcontroller (103), respectively, wherein said microcontroller (103) is adapted for processing transceived RF information; wherein said magnetic induction and receiver module (104) is electrically connected to the at least one microcontroller (103), and wherein said microcontroller (103) is adapted for processing change information of the magnetic field;
an RF card reader (200), comprising at least one RF transceiver module (201), at least one RF antenna (202), and at least one microcontroller (203); wherein said at least one RF transceiver module (201) is electrically connected to the at least one RF antenna (202) and the at least one microcontroller (203), respectively, and said microcontroller (203) is adapted for processing the transceived RF information; wherein the RF card reader (200) further comprises at least one magnetic transmission module (204) for generating and transmitting an induction magnetic field, wherein said magnetic transmission module (204) is electrically connected to the at least one microcontroller (203), and wherein said magnetic transmission module (204) is capable of transmitting a magnetic field based on an instruction information from the microcontroller (203);
**characterized in that** range control is performed through a magnetic field, wherein identity authentication is performed through a magnetic field and radio frequency, and wherein information communication is performed through radio frequency between the RF apparatus (100) and the RF card reader (200); and the RF apparatus (100) configured for sending corresponding RF information to the RF card reader (200) through an RF channel based on an instruction information obtained by demodulation of said detected change information; and configured for performing information communication through radio frequency with the RF card reader (200), if identity authentication is verified by the RF card reader (200) based on the RF information; said system further configured such that otherwise, no operation is performed.

2. An RF secure communication method of a RF apparatus (100), wherein the RF apparatus (100) comprises at least one magnetic induction and receiver module (104) which is capable of sensing a magnetic field and detecting change information of the magnetic field, the method comprising:
**step a:** receiving, by the magnetic induction and receiver module (104), a magnetic field signal transmitted from a magnetic transmission module (204) on an RF card reader (200), wherein the magnetic field signal received is modulated by the magnetic transmission module (204) based on preset instruction information;
**step b:** demodulating, when the magnetic induction and receiver module (104) received the magnetic field signal transmitted from the magnetic transmission module (204), the instruction information therein;
**step c:** sending, by the RF apparatus (100), corresponding RF information to the RF card reader (200) through an RF channel based on an instruction information obtained by demodulation; and
**step d:** performing, by the RF apparatus (100), information communication through radio frequency with the RF card reader (200), if identity authentication is verified by the RF card reader (200) based on the RF information; otherwise, no operation is performed.

3. The RF secure communication method according to Claim 2, wherein the magnetic transmission module comprises an electromagnet and the magnetic field transmitted by said magnetic transmission module (204) is a static magnetic field generated using said electromagnet, wherein the instruction information is modulated on the static magnetic field by one of OOK, time modulation, Manchester encoding, Pulse Width Modulation (PWM) or Pulse Period Modulation (PPM).

4. The RF secure communication method according to Claim 2, wherein the magnetic transmission module (204) comprises a low-frequency signal generator comprising a coil antenna and a switch, the magnetic field transmitted by said magnetic transmission module (204) is an alternating magnetic field generated by means of said low-frequency signal generator , wherein said alternating magnetic field has a frequency of 100 KHz to 0.1 KHz, in particular the frequency is 50 KHz, 30 KHz, 20 KHz, 10 KHz, 5KHz, 2 KHz, or 1 KHz , wherein a modulation mode of the modulation in said **step a** is an on-off keying scheme or a time-modulation scheme and a transmission range of said magnetic transmission module (204) is set within a preset range.

5. The RF secure communication method according to any one of Claims 2 to 4 wherein,
in said step c, the RF apparatus (100) sends the instruction information obtained by demodulation to the RF card reader (200) directly through an RF channel;
in said **step d,** if the instruction information sent from the RF apparatus (100) received by the RF card reader (200) through the RF channel is the same as the preset instruction information, the identity authentication is verified, otherwise the identity authentication is not verified.

## Patentansprüche

1. Ein sicheres HF-Kommunikationssystem, wobei das sichere HF-Kommunikationssystem Folgendes beinhaltet:
Ein Funkfrequenzgerät (HF) (100), das aus mindestens einem HF-Sendeempfängermodul (101), mindestens einer HF-Antenne (102), mindestens einem magnetischen Induktions- und Empfängermodul (104), das in der Lage ist, ein Magnetfeld wahrzunehmen und Änderungsinformationen des Magnetfelds zu erkennen, sowie mindestens einem Mikrocontroller (103) besteht; wobei mindestens ein HF-Sendeempfängermodul (101) mit mindestens einer HF-Antenne (102) und mindestens einem Mikrocontroller (103) jeweilig elektrisch verbunden ist, wobei der Mikrocontroller (103) für die Verarbeitung der gesendeten HF-Informationen vorgesehen ist; wobei das magnetische Induktions- und Empfängermodul (104) mit mindestens einem Mikrocontroller (103) elektrisch verbunden ist und wobei der Mikrocontroller (103) für die Verarbeitung der Änderungsinformationen des Magnetfelds vorgesehen ist;
ein HF-Kartenlesegerät (200), das aus mindestens einem HF-Sendeempfängermodul (201), mindestens einer HF-Antenne (202) und mindestens einem Mikrocontroller (203) besteht; wobei mindestens ein HF-Sendeempfängermodul (201) mit mindestens einer HF-Antenne (202) und mindestens einem Mikrocontroller (203) jeweilig elektrisch verbunden ist und der Mikrocontroller (203) für die Verarbeitung der gesendeten HF-Informationen vorgesehen ist; wobei das HF-Kartenlesegerät (200) zudem aus mindestens einem magnetischen Übertragungsmodul (204) zur Erzeugung und Übertragung eines magnetischen Induktionsfelds besteht, wobei das magnetische Übertragungsmodul (204) mit mindestens einem Mikrocontroller (203) elektrisch verbunden ist und wobei das magnetische Übertragungsmodul (204) in der Lage ist, ein Magnetfeld auf Basis einer Anweisungsinformation vom Mikrocontroller (203) zu übertragen;
**dadurch gekennzeichnet, dass** der Bereich über ein Magnetfeld gesteuert wird, wobei die Identität über ein Magnetfeld und die Funkfrequenz authentifiziert wird und wobei Informationen mittels Funkfrequenz zwischen dem HF-Gerät (100) und dem HF-Kartenlesegerät (200) ausgetauscht werden; das HF-Gerät (100) auf Basis einer Anweisungsinformation, die durch Demodulation der erkannten Änderungsinformation bezogen wird, auch für die Versendung der entsprechenden HF-Informationen über einen HF-Kanal zum HF-Kartenlesegerät (200) sowie für den Austausch von Informationen über Funkfrequenz mit dem HF-Kartenlesegerät (200) konfiguriert ist, sofern die Identität vom HF-Kartenlesegerät (200) auf Basis der HF-Informationen authentifiziert wird; und das System auch so konfiguriert ist, dass andernfalls kein Betriebsvorgang stattfindet.

2. Eine sichere HF-Kommunikationsmethode eines HF-Geräts (100), wobei das HF-Gerät (100) aus mindestens einem magnetischen Induktions- und Empfängermodul (104) besteht, das in der Lage ist, ein Magnetfeld wahrzunehmen und Änderungsinformationen des Magnetfelds zu erkennen, und die Methode Folgendes umfasst:
**Schritt a:** Empfang eines Magnetfeldsignals mittels magnetischem Induktions- und Empfängermodul (104), das von einem magnetischen Übertragungsmodul (204) am HF-Kartenlesegerät (200) übertragen wird, wobei das empfangene Magnetfeldsignal vom magnetischen Übertragungsmodul (204) auf Basis einer voreingestellten Anweisungsinformation moduliert wurde;
**Schritt b:** Demodulation der darin enthaltenen Anweisungsinformation, wenn das magnetische Induktions- und
Empfängermodul (104) das Magnetfeldsignal empfängt, das vom magnetischen Übertragungsmodul (204) übertragen wurde;
**Schritt c:** Senden von entsprechenden HF-Informationen an das HF-Kartenlesegerät (200) mittels des HF-Geräts (100) über einen HF-Kanal auf Basis der per Demodulation bezogenen Anweisungsinformation; und
**Schritt d:** Austausch von Informationen mittels des HF-Geräts (100) über Funkfrequenz mit dem HF-Kartenlesegerät (200), sofern die Identität vom HF-Kartenlesegerät (200) auf Basis der HF-Informationen authentifiziert wird; andernfalls findet kein Betriebsvorgang statt.

3. Eine sichere HF-Kommunikationsmethode gemäß Anspruch 2, wobei das magnetische Übertragungsmodul aus einem Elektromagneten besteht und es sich beim vom magnetischen Übertragungsmodul (204) übertragene Magnetfeld um ein mit dem Elektromagneten erzeugtes statisches Magnetfeld handelt, wobei die Anweisungsinformation im statischen Magnetfeld mittels OOK-Amplitudenumtastung, Zeitmodulation, Manchester-Code, Pulsweitenmodulation (PWM) oder Pulsphasenmodulation (PPM) moduliert wird.

4. Eine sichere HF-Kommunikationsmethode gemäß Anspruch 2, wobei das magnetische Übertragungsmodul (204) aus einem niederfrequenten Signalgenerator mit einer Antennenspule und einem Schalter besteht und es sich bei dem vom magnetischen Übertragungsmodul (204) übertragenen Magnetfeld um ein magnetisches Wechselfeld handelt, das vom niederfrequenten Signalgenerator erzeugt wird, wobei dieses magnetische Wechselfeld eine Frequenz von 100 KHz bis 0,1 KHz aufweist, insbesondere eine Frequenz von 50 KHz, 30 KHz, 20 KHz, 10 KHz, 5 KHz, 2 KHz oder 1 KHz, wobei es sich bei dem Modulationsmodus der Modulation in **Schritt a** um ein On-Off Keying-Schema oder ein Zeitmodulationsschema handelt und der Übertragungsbereich des magnetischen Übertragungsmoduls (204) innerhalb eines voreingestellten Bereichs eingestellt ist.

5. Eine sichere HF-Kommunikationsmethode gemäß den Ansprüchen 2 bis 4, wobei
gemäß **Schritt c** das HF-Gerät (100) die per Demodulation bezogene Anweisungsinformation direkt über einen HF-Kanal zum HF-Kartenlesegerät (200) sendet;
gemäß **Schritt d** die Identität authentifiziert wird, sofern es sich bei der vom HF-Gerät (100) versendeten und vom HF-Kartenlesegerät (200) über den HF-Kanal erhaltene Anweisungsinformation um die voreingestellte Anweisungsinformation handelt, denn andernfalls wird die Identität nicht authentifiziert.

## Revendications

1. Un système de communication RF sécurisée, dans lequel ledit système de communication RF sécurisée comprend :
un appareil à radiofréquence (RF) (100), comprenant au moins un module émetteur-récepteur RF (101), au moins une antenne RF (102), au moins un module récepteur et d'induction magnétique (104) capable de détecter un champ magnétique et de détecter les informations de changement du champ magnétique, et au moins un microcontrôleur (103) ; dans lequel ledit au moins un module émetteur-récepteur RF (101) est connecté électriquement à au moins une antenne RF (102) et au moins un microcontrôleur (103), respectivement, dans lequel ledit microcontrôleur (103) est à même de traiter les informations RF émises et reçues ; dans lequel ledit module récepteur et d'induction magnétique (104) est connecté électriquement à au moins un microcontrôleur (103), et dans lequel ledit microcontrôleur (103) est à même de traiter les informations de changement du champ magnétique ;
un lecteur de carte RF (200), comprenant au moins un module émetteur-récepteur RF (201), au moins une antenne RF (202), et au moins un microcontrôleur (203) ; dans lequel ledit au moins un module émetteur-récepteur RF (201) est connecté électriquement à au moins une antenne RF (202) et au moins un microcontrôleur (203), respectivement, et ledit un microcontrôleur (203) est à même de traiter les informations RF émises et reçues ; dans lequel ledit lecteur de carte RF (200) comprend en outre au moins un module de transmission magnétique (204) afin de générer et transmettre un champ à induction magnétique, dans lequel ledit module de transmission magnétique (204) est connecté électriquement à au moins un microcontrôleur (203), et dans lequel ledit module de transmission magnétique (204) est capable de transmettre un champ magnétique basé sur les informations d'instruction du microcontrôleur (203) ;
**caractérisé en ce que** la commande de portée est exécutée via un champ magnétique, dans lequel l'authentification d'identité est effectuée via un champ magnétique et une fréquence radio, et dans lequel la communication des informations est réalisée via des fréquences radio entre l'appareil RF (100) et le lecteur RF (200) ; et l'appareil RF (100) est configuré pour envoyer les informations RF correspondantes au lecteur de carte RF (200) via un canal RF basé sur des informations d'instruction obtenues par démodulation desdites informations de changement détectées ; et configuré pour réaliser la communication d'informations via fréquence radio avec le lecteur de carte RF (200) si l'authentification d'identité est validée par le lecteur de carte RF (200) basé sur les informations RF ; ledit système est en outre configuré afin qu'à défaut aucune opération ne soit effectuée.

2. Un système de communication RF sécurisée d'un appareil RF (100), dans lequel l'appareil RF (100) comprend au moins un module récepteur et d'induction magnétique (104) capable de détecter un champ magnétique et de détecter les informations de changement du champ magnétique, la méthode comprenant :
**étape a :** recevoir, avec le module récepteur et d'induction magnétique (104), un signal de champ magnétique transmis par un module de transmission magnétique (204) sur un lecteur de carte RF (200), dans lequel le signal de champ magnétique reçu est modulé par le module de transmission magnétique (204) basé sur des informations d'instruction prédéfinies ;
**étape b :** démoduler, lorsque le module récepteur et d'induction magnétique (104) a reçu le signal de champ magnétique transmis par le module de transmission magnétique (204), les informations d'instruction qui s'y trouvent ;
**étape c :** envoyer, avec l'appareil RF (100), les informations RF correspondantes au lecteur de carte RF (200) via un canal RF basé sur des informations d'instruction obtenues par démodulation ; et
**étape d :** effectuer, avec l'appareil RF (100), une communication d'informations par radio fréquences avec le lecteur de carte RF (200) si l'authentification d'identité est validée par le lecteur de carte RF (200) basé sur les informations RF, à défaut aucune opération n'est réalisée.

3. Une méthode de communication RF sécurisée selon la revendication 2, dans laquelle le module de transmission magnétique comprend un électroaimant, et le champ magnétique transmis par ledit module de transmission magnétique (204) est un champ magnétique statique généré à l'aide dudit électroaimant, dans lequel les informations d'instruction sont modulées sur le champ magnétique statique par tout ou rien, modulation temporelle, code Manchester, modulation de largeur d'impulsion (Pulse Width Modulation, PWM) ou modulation de phase d'impulsion (Pulse Period Modulation, PPM).

4. Une méthode de communication RF sécurisée selon la revendication 2, dans laquelle le module de transmission magnétique (204) comprend un générateur de signaux de basse fréquence comprenant une bobine antenne et un interrupteur, le champ magnétique transmis par ledit module de transmission magnétique (204) est un champ magnétique alternatif généré au moyen dudit générateur de signaux de basse fréquence, dans lequel ledit champ magnétique alternatif est de fréquences 100 KHz à 0,1 KHz, et en particulier de fréquence 50 KHz, 30 KHz, 20 KHz, 10 KHz, 5KHz, 2 KHz ou 1 KHz, dans lequel un mode de modulation de ladite étape a est un schéma Tout ou Rien ou un schéma de modulation temporelle et une portée de transmission dudit module de transmission magnétique (204) est définie à l'intérieur d'une gamme prédéfinie.

5. Une méthode de communication RF sécurisée selon l'une quelconque des revendications 2 ou 4 dans laquelle,
dans ladite **étape c,** l'appareil RF (100) envoie des informations d'instruction obtenues par démodulation au lecteur de carte RF (200) directement via un canal RF ;
dans ladite **étape d,** si les informations d'instruction envoyées par l'appareil RF (100) reçues par le lecteur de carte RF (200) via le canal RF sont les mêmes que les informations d'instruction prédéfinies, l'authentification d'identité est validée, à défaut l'authentification d'identité ne l'est pas.
